# EUROPEAN PATENT APPLICATION

(11) **EP 4 796 910 A1**
(43) Date of publication of application: **26.08.2026**
(21) Application number: 24880010.4
(22) Date of filing: 30.09.2024
(51) Int. Cl.: G01M 13/028, G01M 13/021, G01M 13/025, G01H 1/00, G01H 1/12, G06N 3/08

(54) **VIBRATION SIGNAL-BASED DEVICE AND METHOD FOR DIAGNOSING GEAR BOX**

(30) Priority: 17.10.2023 KR 20230138192
(71) Applicant: HD Construction Equipment Co., Ltd., Seongnam-si, Gyeonggi-do 13553 (KR); Seoul National University R&DB Foundation, Seoul 08826 (KR)
(72) Inventor: KIM, Keon, Seongnam-si, Gyeonggi-do 13610 (KR); YOUN, Byeng Dong, Seoul 08826 (KR); NA, Kyumin, Seoul 08826 (KR); LEE, Jinwook, Seoul 08826 (KR); YOO, Jinoh, Seoul 08826 (KR)
(74) Representative: Isarpatent
(86) International application number: PCT/KR2024/014894
(87) International publication number: WO 2025/084671

(57) **Abstract**

According to an embodiment of the present invention, a device for diagnosing a gear box may include a preprocessor configured to preprocess a vibration signal obtained from the gear box, an estimator configured to estimate an operating speed of the gear box based on the vibration signal and generate a first energy distribution for a fault estimation signal based on the operating speed, an extractor configured to extract a mono-component signal from the preprocessed vibration signal and perform amplitude demodulation on the mono-component signal to generate a second energy distribution for the mono-component signal, and a diagnostic unit configured to diagnose the gear box based on a similarity between the first energy distribution and the second energy distribution.

## Description

### TECHNICAL FIELD

The present invention relates to a device and method for diagnosing a gear box, and to a device and method for performing a fault diagnosis of a gear box based on a vibration signal obtained from the gear box.

### BACKGROUND ART

Recently, much research has been conducted on data-driven fault diagnosis methods to improve reliability and stability of rotating body systems used in various mechanical equipment. In particular, machine learning-based fault diagnosis methods utilizing deep learning, neural network models, and the like, which are capable of learning characteristic factors extracted from data, are being actively developed. However, to increase robustness of the deep learning and/or neural network models, it is important to ensure that physical characteristics of the rotating body are reflected in the characteristic factors used for learning. However, existing fault diagnosis methods simply use data-driven machine learning methods and do not consider the physical characteristics of the rotating body. Therefore, with existing fault diagnosis methods, it is difficult to accurately diagnose faults in machines and/or rotating bodies used under various operating conditions due to noise caused by road surface environments, shifting conditions, and the like. Therefore, there is a demand for a method capable of more accurately diagnosing whether a fault has occurred in machines and/or rotating bodies operating under various operating conditions.

### [DETAILED DESCRIPTION OF INVENTION]

### [TECHNICAL PROBLEM]

A technical problem to be solved by the present invention is to provide a device and method capable of more accurately diagnosing whether a fault has occurred in a machine and/or a rotating body operating under various operating conditions based on a vibration signal obtained from a gear box.

Another technical problem to be solved by the present invention is to provide a device and method capable of diagnosing whether a fault has occurred in a gear box by considering physical characteristics of the gear box.

The objects to be achieved by the present invention are not limited to those described above, and other objects not expressly mentioned will be readily understood by those of ordinary skill in the art to which the present invention pertains from the following description.

### [TECHNICAL SOLUTION]

According to an embodiment of the present invention, a device for diagnosing a gear box may include a preprocessor configured to preprocess a vibration signal obtained from the gear box, an estimator configured to estimate an operating speed of the gear box based on the vibration signal and generate a first energy distribution for a fault estimation signal based on the operating speed, an extractor configured to extract a mono-component signal from the preprocessed vibration signal and perform amplitude demodulation on the mono-component signal to generate a second energy distribution for the mono-component signal, and a diagnostic unit configured to diagnose the gear box based on a similarity between the first energy distribution and the second energy distribution.

Here, the preprocessor may convert the vibration signal into a signal in a time-frequency domain, calculate an average energy for each frequency in an acceleration section of the converted signal, and then divide an energy for each time period of the each frequency by the average energy.

In addition, the estimator may estimate a sprocket speed using harmonic signals for a gear mesh frequency (GMF) of the gear box obtained from the vibration signal, and generate the first energy distribution based on a speed distribution for the sprocket speed.

At this time, the estimator may respectively determine frequency bands of harmonics for the GMF based on control area network (CAN) data of a machine including the gear box, and estimate the sprocket speed by multiplying harmonic signals obtained in each of the frequency bands.

In addition, the estimator may estimate the speed distribution by marginalizing the sprocket speed, and generate the first energy distribution by multiplying the speed distribution by a reduction gear ratio of the gear box.

Meanwhile, the extractor may extract the mono-component signal by applying a band-pass filter to the preprocessed vibration signal, extract an envelope of the mono-component signal by performing amplitude demodulation on the mono-component signal, and then generate the second energy distribution based on an energy of the envelope.

In addition, the diagnostic unit may diagnose the gear box using a diagnostic model pre-trained based on a normalized feature value based on a similarity between the first energy distribution and the second energy distribution.

In addition, the diagnostic unit may determine that a fault exists in the gear box based on the first energy distribution and the second energy distribution being similar to each other.

According to another embodiment of the present invention, a method for diagnosing a gear box by a gear box diagnostic device may include preprocessing a vibration signal obtained from the gear box, generating a first energy distribution for a fault estimation signal based on an operating speed of the gear box estimated based on the vibration signal, generating a second energy distribution for a mono-component signal by performing amplitude demodulation on the mono-component signal extracted from the preprocessed vibration signal, and diagnosing the gear box based on a similarity between the first energy distribution and the second energy distribution.

According to another embodiment of the present invention, a computer program stored in a computer-readable recording medium may include instructions for causing a processor to perform a gear box diagnostic method comprising preprocessing a vibration signal obtained from a gear box, generating a first energy distribution for a fault estimation signal based on an operating speed of the gear box estimated based on the vibration signal, generating a second energy distribution for a mono-component signal by performing amplitude demodulation on the mono-component signal extracted from the preprocessed vibration signal, and diagnosing the gear box based on a similarity between the first energy distribution and the second energy distribution, when executed by the processor.

### [EFFECTS OF THE INVENTION]

According to an embodiment of the present invention, since the similarity between the speed distribution estimated from the vibration signal and the distribution of the fault signal is used as a characteristic factor, the diagnostic model for diagnosing the gear box can learn the physical characteristics of the gear box, and thus robustness can be improved.

According to an embodiment of the present invention, since the gear box is diagnosed using the diagnostic model trained based on the characteristic factor reflecting the physical characteristics of the gear box, the fault diagnosis performance for machines used under harsh environments and operating conditions and/or gear boxes included therein can be improved.

### BRIEF DESCRIPTION OF THE DRAWINGS

FIG. 1 is a diagram illustrating a gear box diagnostic device according to an embodiment of the present invention.
FIG. 2 is a diagram illustrating a process in which a gear box diagnostic device according to an embodiment of the present invention preprocesses a vibration signal.
FIG. 3 is a diagram illustrating a process in which a gear box diagnostic device according to an embodiment of the present invention removes noise from a vibration signal.
FIG. 4 is a diagram illustrating a process in which a gear box diagnostic device according to an embodiment of the present invention extracts speed information from a vibration signal.
FIG. 5 is a diagram illustrating a process in which a gear box diagnostic device according to an embodiment of the present invention generates an energy distribution for a fault estimation signal based on speed information.
FIG. 6 is a diagram illustrating a process in which a gear box diagnostic device according to an embodiment of the present invention generates an energy distribution for a fault estimation signal based on amplitude demodulation.
FIG. 7 is a diagram illustrating a process in which a gear box diagnostic device according to an embodiment of the present invention diagnoses a gear box.
FIG. 8 is a flowchart illustrating a method for diagnosing a gear box according to an embodiment of the present invention.

### [MODES FOR CARRYING OUT THE INVENTION]

The advantages and features of the present invention, and methods for achieving the same, will become apparent from the following detailed description of embodiments taken in conjunction with the accompanying drawings. However, the present invention is not limited to the embodiments disclosed below, but may be embodied in various different forms. The embodiments are provided merely to make the disclosure of the present invention complete and to fully inform those of ordinary skill in the art of the scope of the invention. The present invention is defined only by the scope of the appended claims. Therefore, in some embodiments, well-known process steps, well-known device structures, and well-known technologies are not described in detail so as to avoid obscuring the present invention.

The terms used herein have been selected from among generally accepted terms that are currently widely used, while taking into account their functions in the present invention. However, these terms may be interpreted differently depending on the intent of those skilled in the art, legal precedent, or the emergence of new technologies. In addition, in certain cases, there are terms arbitrarily selected by the applicant, and in such cases, the meanings of the terms will be described in detail in the corresponding description of the invention. Therefore, the terms used in this specification should be interpreted based on their meanings and the overall content of the present invention, rather than as mere names of the terms.

Throughout this specification, when it is stated that a part "includes" a component, this means that it may include other components, not that it excludes them, unless otherwise stated.

In addition, in the present specification, components in the gear box diagnostic device may mean software or hardware components such as a field programmable gate array (FPGA) or an application specific integrated circuit (ASIC), and perform at least one function or operation. However, the components are not limited to software or hardware. The components may be configured to reside in an addressable storage medium, or may be configured to reproduce one or more processors. Therefore, as an example, the components include components such as software components, object-oriented software components, class components, and task components, processes, functions, attributes, procedures, subroutines, segments of program code, drivers, firmware, microcode, circuits, data, databases, data structures, tables, arrays, and variables. Functions provided in the components of the present invention may be combined into a smaller number of components or further separated into additional components.

In addition, although terms such as first, second, and third may be used in the present specification to describe various components, these components are not limited by the terms. The terms are used only for the purpose of distinguishing one component from another component.

Hereinafter, embodiments of the present invention will be described in detail with reference to the accompanying drawings so that those of ordinary skill in the art to which the present invention pertains can readily implement the invention. In the drawings, parts that are not relevant to the description are omitted to clearly explain the present invention. Throughout this specification, the same reference numerals denote the same elements.

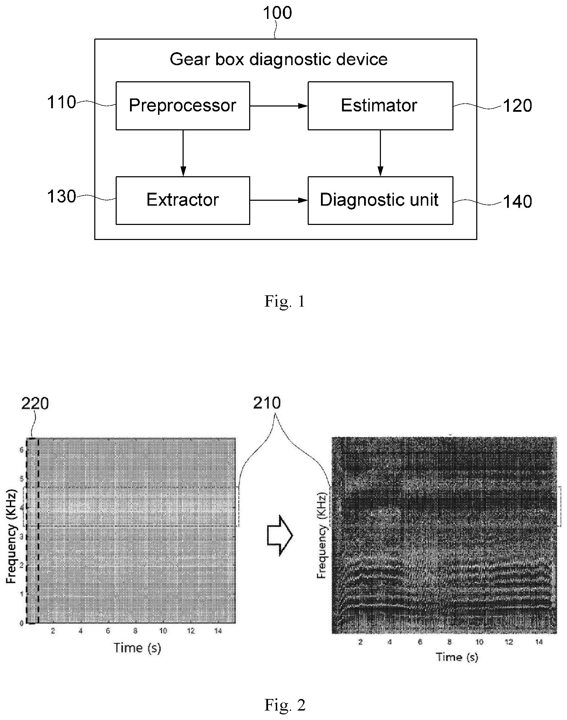

FIG. 1 is a diagram illustrating a gear box diagnostic device according to an embodiment of the present invention.

Referring to FIG. 1, a gear box diagnostic device 100 according to an embodiment of the present invention may include a preprocessor 110, an estimator 120, an extractor 130, and a diagnostic unit 140.

The preprocessor 110 may preprocess a vibration signal (or vibration data) obtained from a gear box to remove noise from the vibration signal. Here, the gear box is a device including a plurality of gears for transmitting power, and may include a planetary gear box provided in a driving unit of a construction machine such as an excavator. The gear box may be used interchangeably with terms such as a gear case and a gear set.

As an example, the preprocessor 110 may convert the vibration signal obtained from the gear box into a signal in a time-frequency domain, calculate an average energy for each frequency in an acceleration section of the signal converted into the time-frequency domain, and then divide an energy for each entire time period of the each frequency by the average energy to remove noise from the vibration signal.

The estimator 120 may be configured to estimate an operating speed of the gear box based on the vibration signal obtained from the gear box, and generate an energy distribution for a signal estimated as a fault (hereinafter, referred to as a fault estimation signal) based on the operating speed. Hereinafter, the energy distribution generated based on speed information estimated by the estimator 120 is referred to as a first energy distribution.

As an example, the estimator 120 may obtain harmonic signals for a gear mesh frequency (GMF) of the gear box from the vibration signal, and estimate a sprocket speed of the gear box using the harmonic signals. In addition, the estimator 120 may generate a first energy distribution based on a speed distribution for the sprocket speed. To this end, as an example, the estimator 120 may respectively determine frequency bands of GMF harmonics based on control area network (CAN) data of a machine including the gear box, and estimate the sprocket speed by multiplying harmonic signals obtained in each of the frequency bands. In addition, the estimator 120 may estimate or generate a speed distribution (a probability distribution for speed) by marginalizing the sprocket speed, and generate the first energy distribution by multiplying the speed distribution by a reduction gear ratio of the corresponding gear box.

The extractor 130 may be configured to extract a mono-component signal from the vibration signal preprocessed by the preprocessor 110, that is, the vibration signal from which noise is removed, and generate an energy distribution for the mono-component signal by performing amplitude demodulation on the mono-component signal. Hereinafter, the energy distribution generated based on the amplitude demodulation in the extractor 130 is referred to as a second energy distribution.

As an example, the extractor 130 may extract one component signal among a plurality of harmonic signals included in the corresponding vibration signal by applying a band-pass filter to the preprocessed vibration signal, and extract an envelope of the corresponding signal by performing amplitude demodulation on the extracted component signal. In addition, the extractor 130 may generate the second energy distribution based on an energy of the corresponding envelope.

The diagnostic unit 140 may be configured to diagnose the gear box based on a similarity between the first energy distribution generated by the estimator 120 and the second energy distribution generated by the extractor 130. For example, the diagnostic unit 140 may diagnose the gear box using a diagnostic model pre-trained based on a normalized feature value based on the similarity between the first energy distribution and the second energy distribution. In this case, the diagnostic unit 140 may determine that a fault exists in the gear box when the first energy distribution and the second energy distribution are similar to each other, that is, when the similarity between the first energy distribution and the second energy distribution is high, and determine that the gear box is normal when the first energy distribution and the second energy distribution are not similar to each other, that is, when the similarity between the first energy distribution and the second energy distribution is low.

Hereinafter, a process in which the gear box diagnostic device according to an embodiment of the present invention diagnoses the gear box will be described in more detail.

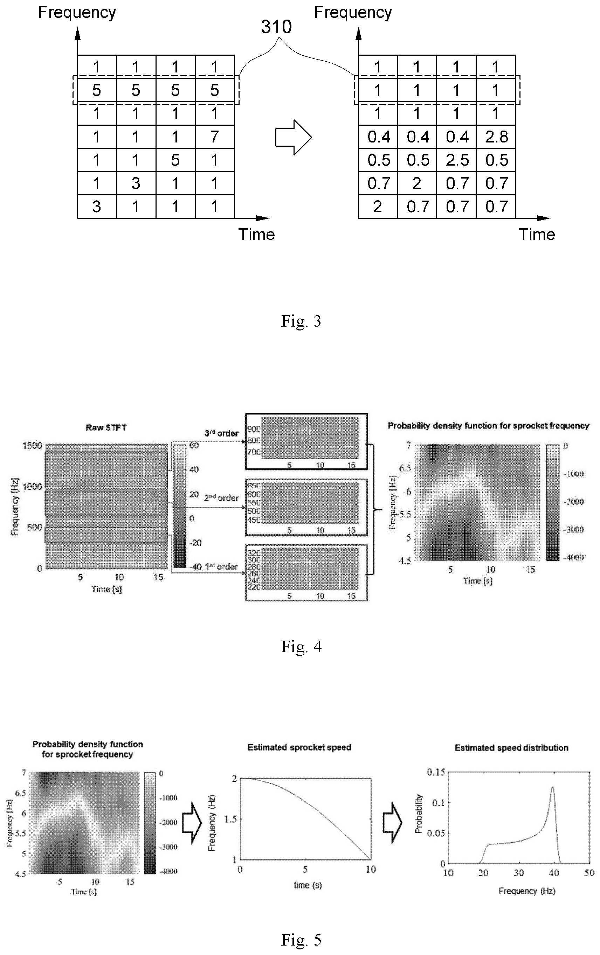

FIG. 2 is a diagram illustrating a process in which the gear box diagnostic device according to an embodiment of the present invention preprocesses a vibration signal, and FIG. 3 is a diagram illustrating a process in which the gear box diagnostic device according to an embodiment of the present invention removes noise from the vibration signal.

The gear box diagnostic device according to an embodiment of the present invention may determine whether a fault has occurred in the gear box by using a similarity between the first energy distribution derived based on speed information estimated from the vibration signal and the second energy distribution of the mono-component signal extracted from the vibration signal as a characteristic factor. Therefore, for accurate speed estimation and/or fault signal extraction, it is necessary to first remove a noise component of a constant frequency existing in the vibration signal due to resonance, electrical noise, and the like caused by harsh environments. Referring to FIG. 2, a frequency band 210 in which noise exists exhibits high energy even in an acceleration section 220. Therefore, the gear box diagnostic device may convert a one-dimensional vibration signal into a two-dimensional image using a time-frequency representation technique such as a short time Fourier transform (STFT), and calculate an average energy value for each frequency in the acceleration section 220 using Equation 1 below. ${E}_{accel} \left(f\right) = \frac{{\sum }_{{t}_{0}}^{{t}_{accel}} {S}_{raw}^{2} \left(t, f\right)}{{t}_{accel} - {t}_{0}}$

In addition, the gear box diagnostic device may remove the noise from the vibration signal by normalizing an energy value of each frequency in the entire time-frequency domain by dividing the energy value by the average energy value of the corresponding frequency in the acceleration section derived based on Equation 1, using Equation 2 below. ${S}_{filtered} \left(t, f\right) = \frac{{S}_{raw} \left(t, f\right)}{\sqrt[2]{{S}_{raw}^{2} \left(t, f\right) / \left({S}_{raw}^{2}\left(t, f\right)-{E}_{accel}\left(f\right)\right)}}$

For example, as illustrated in FIG. 3, when noise indicating an energy value of '5' exists at a specific frequency 310 on a time-frequency representation, it can be confirmed that the noise is removed because dividing an energy value for each time period of the corresponding frequency 310 by '5', which is the average energy value of the specific frequency 310 in the acceleration section, results in 5/5 = 1. For a frequency in which energy values for each time period in the acceleration section are (1, 1, 1, 7), the average energy value of the corresponding frequency is '2.5', and when the energy values for each time period of the corresponding frequency are divided by '2.5', which is the average energy value of the corresponding frequency, the energy values for each time period of the corresponding frequency become (0.4, 0.4, 0.4, 2.8). Therefore, removing noise of a constant frequency from the vibration signal using Equations 1 and 2 prevents signal distortion, thereby enabling accurate speed estimation and/or fault signal extraction from the corresponding signal.

FIG. 4 is a diagram illustrating a process in which the gear box diagnostic device according to an embodiment of the present invention extracts speed information from a vibration signal, and FIG. 5 is a diagram illustrating a process in which the gear box diagnostic device according to an embodiment of the present invention generates an energy distribution for a fault estimation signal based on the speed information.

The gear box diagnostic device according to an embodiment of the present invention may directly estimate the operating speed of the corresponding gear box based on the vibration signal converted into the time-frequency domain. At this time, a plurality of harmonics rather than a single harmonic may be used for robustness.

As an example, referring to FIG. 4, the gear box diagnostic device may separate a frequency band corresponding to each harmonic of the GMF from an image (or data) generated through the STFT by setting a range of a sprocket speed (or operating speed) based on CAN data of the machine including the gear box, and calculating the frequency band corresponding to each harmonic of the GMF using a gear ratio of the corresponding gear box. In addition, the gear box diagnostic device may derive a probability density function for the sprocket frequency by considering the harmonic signal of each frequency band as a probability density function and equally multiplying (overlapping) the respective probability density functions with each other. At this time, when estimating the sprocket speed as illustrated in FIG. 4, the gear box diagnostic device may use three harmonics (a first harmonic, a second harmonic, and a third harmonic) for the GMF, and to this end, as an example, the gear box diagnostic device may use a multi-order probabilistic approach (MOPA).

The operating speed of the gear box is proportional to a frequency of the fault signal. Therefore, when the probability density function for the sprocket speed is derived through the above-described process, the gear box diagnostic device may estimate the sprocket speed based on the corresponding probability density function as illustrated in FIG. 5, and estimate or generate a speed distribution for the sprocket speed by marginalizing the estimated sprocket speed. In addition, the gear box diagnostic device may generate the first energy distribution for the fault estimation signal related to the sprocket speed by multiplying the corresponding speed distribution by a reduction gear ratio or a gear ratio of the corresponding gear box.

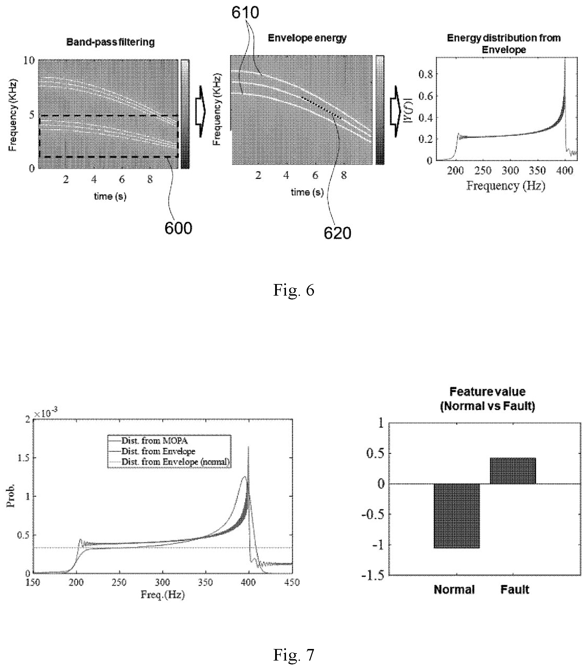

FIG. 6 is a diagram illustrating a process in which a gear box diagnostic device according to an embodiment of the present invention generates an energy distribution for a fault estimation signal based on amplitude demodulation.

Referring to FIG. 6, the gear box diagnostic device may extract a mono-component signal 600 from the preprocessed vibration signal by applying a band-pass filter to the preprocessed vibration signal. Here, the preprocessed vibration signal represents a vibration signal obtained by removing noise from a raw signal obtained from the gear box, and for example, may mean a vibration signal obtained by performing an inverse STFT (ISTFT) on an image (or data) from which noise of a constant frequency is removed based on Equation 1 and Equation 2. In addition, the mono-component signal 600 may mean a signal for one harmonic among a plurality of harmonics for the GMF.

If a fault occurs in the gear box, a sideband component 610 exists around a center frequency (GMF or a harmonic thereof) in the vibration signal obtained from the corresponding gear box, as illustrated in FIG. 6. A gap between the center frequency and the sideband indicates a modulation associated with the fault. When the sideband component does not exist, an energy change 620 of the center frequency may indicate the modulation associated with the fault. Therefore, the gear box diagnostic device may extract an envelope of the corresponding signal by performing amplitude demodulation based on a Hilbert transform and the like on the mono-component signal extracted through the band-pass filter, and then generate the second energy distribution based on an energy of the envelope. When a fault exists in the gear box, an envelope of a fault signal (modulated signal) may be extracted by amplitude demodulation, and when the gear box is normal, an envelope of a normal signal (GMF or a harmonic signal thereof) may be extracted by amplitude demodulation.

FIG. 7 is a diagram illustrating a process in which a speed estimation device according to an embodiment of the present invention diagnoses the gear box.

Referring to FIG. 7, for example, an energy distribution generated based on a multi-order probabilistic approach (MOPA) result, an energy distribution generated based on an envelope of a fault signal, and an energy distribution generated based on an envelope of a normal signal are illustrated. An envelope energy of the normal signal has a constant distribution in all frequency bands as illustrated in FIG. 7. On the other hand, an envelope energy of the fault signal has a distribution similar to an energy distribution generated from an operating speed. Therefore, when the energy distribution (first energy distribution) generated based on the MOPA result and the envelope energy distribution (second energy distribution) generated based on the amplitude demodulation result are similar to each other, it may be determined that a fault exists in the corresponding gear box, and when the first energy distribution and the second energy distribution are not similar to each other, the corresponding gear box may be determined to be normal.

To this end, for example, the gear box diagnostic device may quantify a similarity between the first energy distribution and the second energy distribution through a Kullback-Leibler divergence (KLD), and derive a normalized feature value using Equation 3 below based on the similarity between the first energy distribution and the second energy distribution. $Feature = 1 - {\sum }_{x} {P}_{MOPA} \left(x\right) log \left(\frac{{P}_{MOPA} \left(x\right)}{{P}_{Envelope} \left(x\right)}\right) / {\sum }_{x} {P}_{MOPA} \left(x\right) log \left(\frac{{P}_{MOPA} \left(x\right)}{{P}_{Envelope , normal} \left(x\right)}\right)$

The gear box diagnostic device may input the feature value derived as in Equation 3 into a pre-trained diagnostic model, and diagnose the gear box based on a classification result of the diagnostic model. For example, the diagnostic model may be implemented as a binary linear classification model, and a cost function thereof may be determined in consideration of optimization of hyper parameters and a data imbalance.

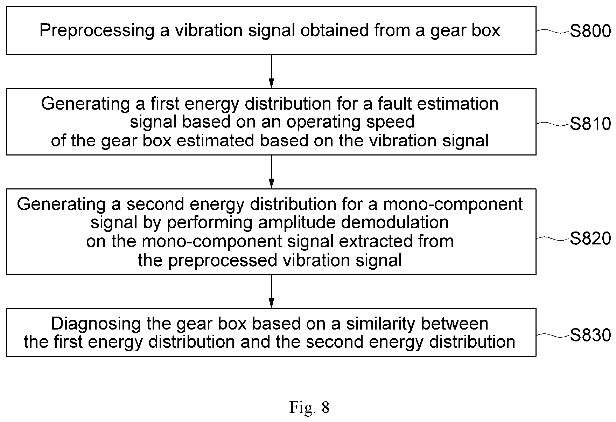

FIG. 8 is a flowchart illustrating a method for diagnosing a gear box according to an embodiment of the present invention.

Referring to FIG. 8, the gear box diagnostic device according to an embodiment of the present invention may preprocess the vibration signal to remove noise of a constant frequency from the vibration signal obtained from the gear box (S800). For example, the gear box diagnostic device may generate an image representing the corresponding vibration signal in a time-frequency domain by performing an STFT on the vibration signal obtained from the gear box, calculate an average energy for each frequency in an acceleration section of the corresponding vibration signal based on the image, and then remove noise from the vibration signal by dividing an energy for each entire time period of the each frequency by the average energy. Here, the image may be referred to as a spectrogram.

Meanwhile, the gear box diagnostic device may generate the first energy distribution for a fault estimation signal based on the operating speed of the gear box estimated based on the vibration signal (S810). For example, the gear box diagnostic device may obtain harmonic signals for a gear mesh frequency (GMF) of the gear box from the image (spectrogram) converted through the STFT, and estimate a sprocket speed of the corresponding gear box by multiplying the harmonic signals. In addition, the gear box diagnostic device may generate the first energy distribution based on a speed distribution for the sprocket speed. To this end, the gear box diagnostic device may determine a range of the sprocket speed based on CAN data of a machine including the corresponding gear box, calculate a frequency band corresponding to each harmonic of the GMF by multiplying the sprocket speed by a gear ratio of the corresponding gear box, divide the image into frequency bands corresponding to the respective GMF harmonics by the calculation, and estimate the sprocket speed (probability density function for a sprocket frequency) by multiplying harmonic signals (probability density functions) obtained in the respective frequency bands based on the MOPA. Thereafter, the gear box diagnostic device may estimate a speed distribution by marginalizing the sprocket speed, and generate the first energy distribution by multiplying the speed distribution by a reduction gear ratio of the corresponding gear box.

In addition, the gear box diagnostic device may generate the second energy distribution by performing amplitude demodulation on a mono-component signal extracted from the preprocessed vibration signal, that is, the vibration signal from which noise is removed (S820). For example, the gear box diagnostic device may extract one component signal from among a plurality of harmonic signals included in the corresponding signal by band-pass filtering the preprocessed vibration signal, extract an envelope of the corresponding signal by performing Hilbert transform-based amplitude demodulation on the extracted component signal, and then generate the second energy distribution based on an energy of the envelope.

When the first energy distribution and the second energy distribution are generated, the gear box diagnostic device may diagnose the corresponding gear box based on a similarity between the first energy distribution and the second energy distribution (S830). For example, the gear box diagnostic device may derive a feature value by quantifying the similarity between the first energy distribution and the second energy distribution, normalize the derived feature value, and input the normalized feature value into a pre-trained diagnostic model. In addition, the gear box diagnostic device may determine whether a fault has occurred in the corresponding gear box based on a classification result of the diagnostic model. If the feature value is greater than a threshold value (for example, 0), that is, if the similarity between the first energy distribution and the second energy distribution is high, the gear box diagnostic device may determine that a fault exists in the corresponding gear box. However, if the feature value is less than the threshold value, that is, if the similarity between the first energy distribution and the second energy distribution is low, the gear box diagnostic device may determine that the corresponding gear box is normal.

Meanwhile, each step included in the method for diagnosing a gear box performed by the gear box diagnostic device according to the above-described embodiments may be implemented as a computer program including instructions for causing a processor to perform these steps.

In addition, each step included in the method for diagnosing a gear box performed by the gear box diagnostic device according to the above-described embodiments may be implemented on a computer-readable recording medium having recorded thereon a computer program including instructions for causing a processor to perform these steps.

Combinations of respective steps of the flowcharts attached to the present invention may be performed by computer program instructions. Since the computer program instructions may be mounted on a processor of a general-purpose computer, a special purpose computer, or other programmable data processing equipment, the instructions executed through the processor of the computer or other programmable data processing equipment create means for performing functions described in the respective steps of the flowcharts. Since the computer program instructions may also be stored in a computer-usable or computer-readable recording medium that can direct the computer or other programmable data processing equipment to implement functions in a specific manner, the instructions stored in the computer-usable or computer-readable recording medium can also produce an article of manufacture including instruction means for performing the functions described in the respective steps of the flowcharts. Since the computer program instructions may also be mounted on the computer or other programmable data processing equipment, a series of operational steps may be performed on the computer or other programmable data processing equipment to create a computer-executed process, and the instructions executing the computer or other programmable data processing equipment may provide steps for executing the functions described in the respective steps of the flowcharts.

In addition, each step may represent a module, a segment, or a portion of code including one or more executable instructions for executing specified logical function(s). In addition, in some alternative embodiments, it is also possible for functions mentioned in the steps to occur out of order. For example, two steps shown in succession may be performed substantially simultaneously, or the steps may sometimes be performed in reverse order depending on corresponding functions.

The foregoing description is merely illustrative of the technical ideas of the present invention, and those of ordinary skill in the art to which the present invention pertains will be able to make various modifications and variations without departing from the essential characteristics of the present invention. Therefore, the embodiments disclosed in the present invention are not intended to limit the technical ideas of the present invention but rather to illustrate them, and the scope of the technical ideas of the present invention is not limited by these embodiments. The scope of protection of the present invention shall be interpreted based on the following claims, and all technical ideas falling within an equivalent scope shall be construed as being included within the scope of rights of the present invention.

### [REFERENCE NUMERALS]

100: gear box diagnostic device
110: Preprocessor
120: Estimator
130: Extractor
140: Diagnostic unit

## Claims

1. A device for diagnosing a gear box, comprising:
a preprocessor configured to preprocess a vibration signal obtained from the gear box;
an estimator configured to estimate an operating speed of the gear box based on the vibration signal, and generate a first energy distribution for a fault estimation signal based on the operating speed;
an extractor configured to extract a mono-component signal from the preprocessed vibration signal, and perform amplitude demodulation on the mono-component signal to generate a second energy distribution for the mono-component signal; and
a diagnostic unit configured to diagnose the gear box based on a similarity between the first energy distribution and the second energy distribution.

2. The device of claim 1, wherein
the preprocessor is configured to
convert the vibration signal into a signal in a time-frequency domain, calculate an average energy for each frequency in an acceleration section of the converted signal, and then divide an energy for each time period of the each frequency by the average energy.

3. The device of claim 1, wherein
the estimator is configured to
estimate a sprocket speed using harmonic signals for a gear mesh frequency (GMF) of the gear box obtained from the vibration signal, and generate the first energy distribution based on a speed distribution for the sprocket speed.

4. The device of claim 3, wherein
the estimator is configured to
respectively determine frequency bands of harmonics for the GMF based on control area network (CAN) data of a machine including the gear box, and estimate the sprocket speed by multiplying harmonic signals obtained in each of the frequency bands.

5. The device of claim 3, wherein
the estimator is configured to
estimate the speed distribution by marginalizing the sprocket speed, and generate the first energy distribution by multiplying the speed distribution by a reduction gear ratio of the gear box.

6. The device of claim 1, wherein
the extractor is configured to
extract the mono-component signal by applying a band-pass filter to the preprocessed vibration signal, extract an envelope of the mono-component signal by performing amplitude demodulation on the mono-component signal, and then generate the second energy distribution based on an energy of the envelope.

7. The device of claim 1, wherein
the diagnostic unit is configured to
diagnose the gear box using a diagnostic model pre-trained based on a normalized feature value based on a similarity between the first energy distribution and the second energy distribution.

8. The device of claim 1, wherein
the diagnostic unit is configured to
determine that a fault exists in the gear box based on the first energy distribution and the second energy distribution being similar to each other.

9. A method for diagnosing a gear box by a gear box diagnostic device, the method comprising:
preprocessing a vibration signal obtained from the gear box;
generating a first energy distribution for a fault estimation signal based on an operating speed of the gear box estimated based on the vibration signal;
generating a second energy distribution for a mono-component signal by performing amplitude demodulation on the mono-component signal extracted from the preprocessed vibration signal; and
diagnosing the gear box based on a similarity between the first energy distribution and the second energy distribution.

10. The method of claim 9, wherein
the preprocessing of the vibration signal comprises:
converting the vibration signal into a signal in a time-frequency domain;
calculating an average energy for each frequency in an acceleration section of the converted signal; and
dividing an energy for each time period of the each frequency by the average energy.

11. The method of claim 9, wherein
the generating of the first energy distribution comprises:
estimating a sprocket speed using harmonic signals for a gear mesh frequency (GMF) of the gear box obtained from the vibration signal; and
generating the first energy distribution based on a speed distribution for the sprocket speed.

12. The method of claim 11, wherein
the estimating of the sprocket speed comprises:
respectively determining frequency bands of harmonics for the GMF based on control area network (CAN) data of a machine including the gear box; and
estimating the sprocket speed by multiplying harmonic signals obtained in each of the frequency bands.

13. The method of claim 11, wherein
the generating of the first energy distribution comprises:
generating the speed distribution by marginalizing the sprocket speed; and
generating the first energy distribution by multiplying the speed distribution by a reduction gear ratio of the gear box.

14. The method of claim 9, wherein
the generating of the second energy distribution comprises:
extracting the mono-component signal by applying a band-pass filter to the preprocessed vibration signal;
extracting an envelope of the mono-component signal by performing amplitude demodulation on the mono-component signal; and
generating the second energy distribution based on an energy of the envelope.

15. The method of claim 9, wherein
the diagnosing of the gear box comprises:
diagnosing the gear box using a diagnostic model pre-trained based on a normalized feature value based on a similarity between the first energy distribution and the second energy distribution.

16. The method of claim 9, wherein
the diagnosing of the gear box comprises:
determining that a fault exists in the gear box based on the first energy distribution and the second energy distribution being similar to each other.

17. A computer program stored in a computer-readable recording medium,
the computer program comprising instructions for causing a processor to perform a method for diagnosing a gear box when executed by the processor, the method comprising:
preprocessing a vibration signal obtained from the gear box;
generating a first energy distribution for a fault estimation signal based on an operating speed of the gear box estimated based on the vibration signal;
generating a second energy distribution for a mono-component signal by performing amplitude demodulation on the mono-component signal extracted from the preprocessed vibration signal; and
diagnosing the gear box based on a similarity between the first energy distribution and the second energy distribution.

18. The computer program of claim 17, wherein
the preprocessing of the vibration signal comprises:
converting the vibration signal into a signal in a time-frequency domain;
calculating an average energy for each frequency in an acceleration section of the converted signal; and
dividing an energy for each time period of the each frequency by the average energy.

19. The computer program of claim 17, wherein
the generating of the first energy distribution comprises:
estimating a sprocket speed using harmonics for a gear mesh frequency (GMF) of the gear box obtained from the vibration signal; and
generating the first energy distribution based on a speed distribution for the sprocket speed.

20. The computer program of claim 17, wherein
the generating of the second energy distribution comprises:
extracting the mono-component signal by applying a band-pass filter to the preprocessed vibration signal;
extracting an envelope of the mono-component signal by performing amplitude demodulation on the mono-component signal; and
generating the second energy distribution based on an energy of the envelope.
